# FASCICULE DE BREVET EUROPEEN

(11) **EP 2 297 705 B1**
(45) Date de publication et mention de la délivrance du brevet: **15.08.2012**
(21) Numéro de dépôt: 09793918.5
(22) Date de dépôt: 29.06.2009
(51) Int. Cl.: G06T 15/20

(54) **PROCEDE DE COMPOSITION TEMPS REEL D'UNE VIDEO**
VERFAHREN ZUR ECHTZEITZUSAMMENSTELLUNG EINES VIDEOS
METHOD FOR THE REAL-TIME COMPOSITION OF A VIDEO

(30) Priorité: 30.06.2008 FR 0854378
(43) Date de publication de la demande: 23.03.2011
(73) Titulaire: Thomson Licensing, 92130 Issy-les-Moulineaux (FR)
(72) Inventeur: MARVIE, Jean-Eudes, F-35000 Rennes (FR); BRIAND, Gérard, F-22440 Ploufragan (FR)
(74) Mandataire: Le Dantec, Claude
(86) Numéro de dépôt international: PCT/EP2009/058121
(87) Numéro de publication internationale: WO 2010/003844

(56) Documents cités:
- EP-A- 0 586 140
- EP-A- 0 594 456
- US-A- 5 280 337
- US-A- 6 151 009
- US-A1- 2003 038 892
- US-A1- 2003 202 120
- TAKEO KANADE ET AL: "Video-Rate Z Keying: A New Method for Merging Images" INTERNET CITATION, [Online] 1 décembre 1995 (1995-12-01), pages 1-8, XP007906775 Extrait de l'Internet: URL:http://www.cs.cmu.edu/afs/cs/project/s tereo-machine/www/95-38.ps.gz> [extrait le 2009-01-12]
- KANADE T ET AL: "A video-rate stereo machine and its new applications" 27TH INTERNATIONAL SYMPOSIUM ON INDUSTRIAL ROBOTS. PROCEEDINGS ISIR,, 1 octobre 1996 (1996-10-01), pages 671-676, XP009110596
- BLONDE L ET AL: "A VIRTUAL STUDIO FOR LIVE BROADCASTING: THE MONA LISA PROJECT" IEEE MULTIMEDIA, IEEE SERVICE CENTER, NEW YORK, NY, US, vol. 3, no. 2, 1 juin 1996 (1996-06-01), pages 18-28, XP000594152
- NAMGYU KIM ET AL: "Photorealistic interactive virtual environment generation using multiview cameras" PROCEEDINGS OF THE SPIE,, vol. 4310, 24 janvier 2001 (2001-01-24), pages 245-254, XP009110592
- KANADE T ET AL: "A STEREO MACHINE FOR VIDEO-RATE DENSE DEPTH MAPPING AND ITS NEW APPLICATIONS" PROC. OF THE 1996 IEEE COMPUTER SOCIETY CONF. ON COMPUTER VISION AND PATTERN RECOGNITION. SAN FRANCISCO, JUNE 18 - 20, 1996, 18 juin 1996 (1996-06-18), pages 196-202, XP000640241
- GIBBS S ET AL: "VIRTUAL STUDIOS: AN OVERVIEW" IEEE MULTIMEDIA, IEEE SERVICE CENTER, NEW YORK, NY, US, vol. 5, no. 1, 1 janvier 1998 (1998-01-01), pages 18-35, XP000739351 ISSN: 1070-986X

## Description

### 1. Domaine de l'invention.

L'invention se rapporte au domaine de la construction en temps réel d'une séquence vidéo comprenant notamment des objets à trois dimensions supportant des flux vidéo temps réel (de l'anglais « live »). L'invention s'inscrit dans le contexte des effets spéciaux pour une composition en temps réel (de l'anglais « live »).

### 2. Etat de l'art.

Selon l'état de la technique, différentes méthodes existent pour faire de la composition vidéo. Une méthode connue consiste à incruster un flux temps réel sur une vidéo pré-calculée à partir de contenu 2D (pour deux dimensions) et 3D (pour trois dimensions). Effectuer le pré-rendu d'une vidéo par pré-calcul permet avantageusement d'enregistrer plusieurs vidéos pour gérer plusieurs points de vue et permet d'afficher des effets très complexes et de bonne qualité au sens du rendu, qualité qui ne peut être atteinte par un rendu en temps réel. Le mélange de deux flux vidéos, c'est-à-dire un flux temps réel avec un flux vidéo pré-calculé, est réalisé à l'aide d'une clé de transparence, ce qui revient à superposer deux calques l'un sur l'autre : il s'agit d'un mélange 2D avec notion de couches. Par contre, une telle méthode ne permet pas de placage de flux temps réel sur une géométrie 3D ni une gestion des occultations. Le mélange d'un flux vidéo temps réel avec un objet 3D pré-calculé, réalisé à l'aide d'un tampon de profondeur (en anglais *«z-buffer»*) est révélé dans les documents suivants : *-* US 6 151 009 (Carnegie Mellon University*), -* US 2003 0038 892, (S. Wang et al*), -* T. Kanade et al, "Video-Rate Z Keying: A New Method for Merging Images", CMU-RI-TR-95-38, Carnegie Mellon University, December 1995*, -* L. Blonde et al, "A Virtual Studio for Live Broadcasting: The Mona Lisa Project". IEEE Multimedia, Summer 1996, Vol. 3, No. 2, pages 18-29*.*

### 3. Résumé de l'invention.

L'invention a pour but de pallier au moins un de ces inconvénients de l'art antérieur.

Plus particulièrement, l'invention a notamment pour objectif la composition en trois dimensions de bonne qualité d'une séquence vidéo intégrant au moins un flux vidéo temps réel.

L'invention concerne un procédé de construction en temps réel d'une séquence vidéo comprenant un objet modélisé en trois dimensions. Le procédé comprend les étapes de :
- pré-calcul de données représentatives d'au moins une première image d'un environnement en trois dimensions et d'une première information de profondeur associée à l'image ;
- calcul temps réel de :
   - données représentatives d'au moins une deuxième image représentant l'objet modélisé sur lequel est plaquée une image courante d'un flux vidéo temps réel, l'image courante formant la texture de l'objet modélisé, et
   - une deuxième information de profondeur associée à la au moins une deuxième image ; et
- composition en temps réel de la séquence par mélange des au moins une première et au moins une deuxième images en fonction des première et deuxième informations de profondeur.

Selon une caractéristique particulière, le procédé comprend les étapes de :
- initialisation d'un tampon destinataire de ladite au moins une deuxième image avec les données représentatives de ladite au moins une première image ; et
- initialisation d'un tampon destinataire de ladite deuxième information de profondeur avec ladite première information de profondeur.

Avantageusement, au moins un test d'occultation est effectué pour chaque pixel de la séquence pendant la composition.

Selon une caractéristique spécifique, l'environnement est une vidéo pré-calculée avec caméra fixe.

Selon une autre caractéristique, l'environnement est une vidéo pré-calculée avec caméra mobile.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre une prise de vue d'un environnement 10, selon un mode de réalisation particulier de l'invention ;
- la figure 2 illustre schématiquement les positions spatiales d'une caméra réalisant la prise de vue de l'environnement 10, selon un mode de réalisation particulier de l'invention ;
- la figure 3 illustre un système 3 de construction d'une séquence vidéo temps réel intégrant notamment l'environnement 10, selon un mode de réalisation particulier de l'invention ;
- la figure 4 illustre un procédé de construction temps réel d'une séquence vidéo selon un mode particulier de réalisation, mis en oeuvre par le système 3 ; et
- la figure 5 illustre un procédé de construction temps réel d'une séquence vidéo selon un autre mode particulier de réalisation, mis en oeuvre par le système 3.

### 5. Description détaillée de modes de réalisation de l'invention.

De manière générale mais non limitative, l'invention concerne un procédé de construction en temps réel d'une séquence vidéo. La séquence vidéo est composée en temps réel par mélange d'une ou plusieurs images d'un environnement pré-rendu par synthèse d'image et d'une ou plusieurs images d'un objet 3D (pour trois dimensions) dont la texture est formée par placage d'un flux vidéo temps réel. Le mélange de l'environnement et de l'objet modélisé sur lequel est plaqué un flux vidéo temps réel est avantageusement réalisé en fonction d'une première information de profondeur associée à l'environnement et d'une deuxième information de profondeur associée à l'objet modélisé.

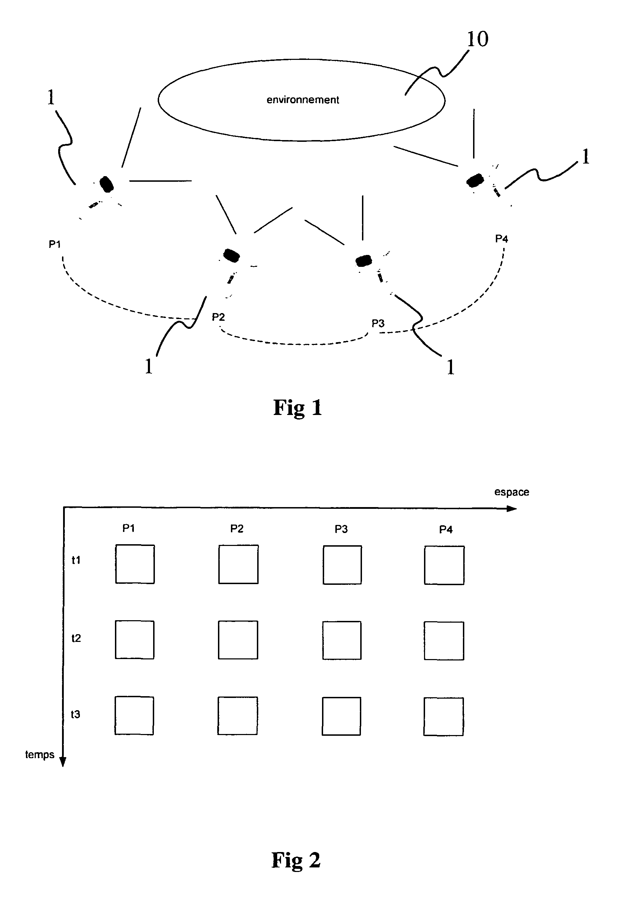

La **figure 1** représente une caméra vidéo 1 en mouvement autour d'un environnement 10 composant par exemple un décor dans lequel seront insérés ultérieurement un ou plusieurs objets, mobiles ou non. De manière avantageuse, la caméra 1 est mobile autour de l'environnement et assure la saisie vidéo de l'environnement par la prise d'images successives. Chaque position de la caméra 1 correspond à un point de vue différent de l'environnement associé à la position spatiale de la caméra. Selon une variante, plusieurs caméras en mouvement autour de l'environnement assurent la saisie vidéo de l'environnement 10. Selon une autre variante, les saisies des différents points de vue de l'environnement 10 sont réalisées par plusieurs caméras fixes. L'environnement 10 est avantageusement composé d'images saisies par une caméra 1 dont la position est fixe, le contenu de l'environnement variant par exemple dans le temps. Selon une variante, l'environnement 10 est composé d'images saisies par plusieurs caméras fixes.

Selon une variante, l'environnement 10 est composé d'images saisies par une caméra 1 mobile, le contenu de l'environnement saisi correspondant par exemple au balayage de la caméra mobile. Le contenu de l'environnement varie également avantageusement dans le temps selon une autre variante.

La **figure 2** représente les quatre positions spatiales P1, P2, P3 et P4 de la caméra 1 illustrées en figure 1. A chaque position spatiale, on associe une trame de pré-rendu et une information de profondeur, par exemple une clé de profondeur, pour chaque pixel de la trame. On peut également modifier la scène dans le temps et ainsi à chaque temps t1, t2, et t3 comme illustré sur la figure 2, on obtient une trame de pré-rendu différente. Multiplier le nombre de trames de pré-rendu complexifie la méthode mais permet également des effets spéciaux plus complexes. Il est également possible d'avoir une évolution des trames de pré-rendu toutes les deux ou trois trames pour représenter des mouvements plus lents. Par exemple, on peut avoir sur la scène un battement de pendule qui oscille à une vitesse inférieure au temps trame et dans ce cas, une image qui ne change pas toutes les trames.

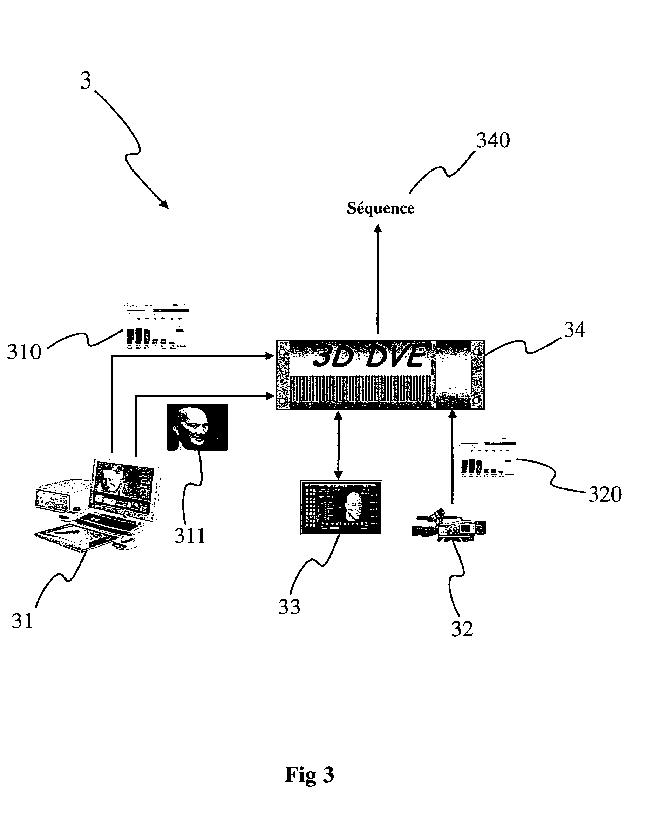

La **figure 3** illustre schématiquement un système 3 de construction de séquence vidéo selon un mode de réalisation particulier de l'invention. Le système 3 comprend les éléments suivants :
- une station de travail (de l'anglais « workstation ») graphique 3D 31 ;
- une caméra vidéo 32 ;
- une interface MMI (ou interface homme/machine de l'anglais « Man Machine Interface ») 33 ; et
- un composeur 3D (de l'anglais « 3D composer ») 34.

La station de travail 31 assure la synthèse graphique de l'environnement 10 saisi par la caméra virtuelle 1 par pré-calcul, tel qu'illustré en figure 1, sur lequel il est possible d'ajouter par exemple des éléments 3D, d'animer tout élément composant l'environnement (par exemple la lumière, les objets, les surfaces géométriques, etc.). On a en entrée de la station de travail 31 l'environnement 10 tel que filmé par la caméra virtuelle 1 et en sortie des données représentatives de la ou les images composant l'environnement 10 et une information de profondeur associée à chaque image de l'environnement 10. L'information de profondeur correspond par exemple à une clé de profondeur associée à chaque pixel de chaque image de l'environnement. Les données représentatives des images de l'environnement 10 et l'information de profondeur associée sont représentées par l'élément 310 sur la figure 3. La station de travail 31 permet également la modélisation d'un ou plusieurs objets tridimensionnels 311, par exemple via tout logiciel de modélisation 3D installé sur la station de travail 31. La méthode utilisée pour la modélisation des objets 3D est par exemple la modélisation polygonale, dans laquelle le modèle est assimilé à un ensemble de polygones chacun défini par la liste des sommets et des arêtes qui le compose, la modélisation par courbe de type NURBS (de l'anglais « Non uniform rational basic spline » ou en français « Spline basique rationnelle non uniforme ») dans laquelle le modèle est défini par un ensemble de courbes créées grâce à des points de contrôle (de l'anglais « control vertices »), la modélisation par subdivision de surfaces ou tout autre méthode connue de l'homme du métier. Selon une variante, le pré-calcul de l'environnement (c'est-à-dire le couple correspondant aux données représentatives des images et à l'information de profondeur associée) et la modélisation de l'objet 3D sont réalisés sur des stations de travail différentes.

Les données représentatives des images synthétisées de l'environnement associées à la ou les informations de profondeur correspondantes d'une part et les données représentatives du ou des objets 3D modélisés d'autre part sont transmises au composeur 3D 34. Les données représentatives de ces images sont avantageusement stockées dans une mémoire tampon du composeur 3D et les informations de profondeur associées sont également enregistrées dans une autre mémoire tampon. Selon une variante, les mémoires tampons servant au stockage des données et de l'information de profondeur sont initialisées à chaque arrivée de données représentatives d'une image et de l'information de profondeur associée. En entrée du composeur 3D 34 arrivent également des données représentatives d'un flux vidéo temps réel 320, les images composant ce flux vidéo étant saisies en temps réel par une caméra vidéo 32. Selon une variante, les données représentatives du flux vidéo temps réel 320 sont fournies au composeur 3D 34 par un serveur sur lequel sont stockées des images sources d'une vidéo préenregistrée. Le flux vidéo n'est dans ce cas plus capturé en temps réel mais est fourni en temps réel au composeur 3D 34.

Le composeur 3D 34 comprend avantageusement une carte 3D comprenant un ou plusieurs GPU (de l'anglais « Graphics processing Unit » ou en français « processeur graphique ») et assure en temps réel le placage (de l'anglais « mapping ») d'une image courante du flux vidéo 320 sur une image correspondante de l'objet modélisé 311. L'image courante du flux vidéo ainsi plaquée forme la texture de l'objet modélisé. Le composeur 3D 34 calcule en temps réel les données représentatives des images de l'objet 3D modélisé sur lequel sont plaquées les images courantes correspondantes du flux vidéo 320 au fur et à mesure de l'arrivée des images pré-calculées de l'objet modélisé et de l'arrivée des images courantes formant le flux vidéo temps réel 320 en entrée du composeur 3D 34. L'objet 3D modélisé sur lequel est appliqué un flux vidéo temps réel pour former la structure de l'objet 3D modélisé est nommé objet 3D texturé dans la suite de la description. Parallèlement au calcul des données représentatives des images de l'objet 3D texturé, le composeur 3D calcule en temps réel une information de profondeur associée à chaque image calculée de l'objet 3D texturé, c'est-à-dire estime une information de profondeur pour chaque pixel de l'image représentant l'objet modélisé 3D ayant pour texture une image du flux vidéo temps réel 320.

Le composeur 3D 34 assure également la composition en temps réel d'une séquence vidéo 340 en sortie du composeur 34. La séquence 340 résulte du mélange des images de l'objet 3D texturé ayant pour texture les images du flux vidéo temps réel 320 avec les images pré-calculées de l'environnement 10. De manière avantageuse, le composeur 3D 34 assure la gestion des occultations en réalisant en temps réel des tests d'occultation pour chaque pixel de chaque image composée. Pour ce faire, le composeur 3D 34 utilise les informations de profondeur, par exemple des clés de profondeur, associées respectivement aux images de l'objet 3D texturé et aux images de l'environnement 10 pré-calculé. La méthode employée pour effectuer les tests d'occultation est par exemple la méthode dite du tampon de profondeur (de l'anglais « Z-buffer »). Ainsi, si un pixel de l'image composée contient la projection de l'objet modélisé et la projection d'un objet de l'environnement 10 synthétisé, la projection la plus proche est retenue, c'est-à-dire la projection ayant la valeur de profondeur Z la plus petite. La profondeur d'une projection visible est stockée dans un tampon de profondeur pour chaque pixel, par exemple la valeur de la profondeur pour chaque pixel d'une image de l'environnement 10 synthétisé est enregistrée dans un tampon de profondeur. Lors d'un déplacement de l'objet 3D texturé, le déplacement étant par exemple provoqué par un utilisateur via l'interface MMI 33, la valeur de la profondeur d'un pixel composant l'image de l'objet 3D texturé est comparée à la valeur de profondeur du pixel dont les coordonnées spatiales correspondent aux coordonnées spatiale du pixel de l'objet 3D considéré, et ce pour chaque pixel de l'objet 3D texturé. Si la valeur de profondeur du pixel de l'objet 3D est inférieure à la valeur de profondeur du pixel de l'environnement correspondant, ce sont les données (par exemple les données RGB (de l'anglais « Red, Green, Blue » ou en français « Rouge, vert, bleu »)) correspondant au pixel de l'objet 3D texturé (et stockées dans une mémoire tampon dédiée aux données des images de l'objet 3D texturé) qui seront affichées en sortie du composeur 3D 34, c'est-à-dire dans l'image de la séquence composée 340. Si la valeur de profondeur du pixel de l'objet 3D est supérieure à la valeur de profondeur du pixel de l'environnement correspondant, ce sont les données (par exemple les données RGB) correspondant au pixel de l'image de l'environnement 10 synthétisé (et stockées dans une mémoire tampon dédiée aux données des images de l'environnement pré-calculé (ou synthétisé)) qui seront affichées en sortie du composeur 3D 34, c'est-à-dire dans l'image de la séquence composée 340.

Une telle méthode présente l'avantage d'utiliser toute la puissance de calcul du composeur 3D 34 pour le placage d'un flux vidéo temps réel sur un objet 3D modélisé et pour le rendu d'une séquence vidéo composée d'un objet 3D texturé et d'un environnement synthétisé, l'environnement et l'objet 3D modélisé ayant été calculés au préalable.

Selon une variante particulièrement avantageuse, les données d'une image pré-calculée de l'environnement transmises au composeur 3D sont enregistrées dans une première mémoire tampon. L'information de profondeur associée, par exemple les clés de profondeur associées à chacun des pixels de l'image pré-calculée, sont enregistrées dans une deuxième mémoire tampon. Lorsque les données de l'image de l'objet 3D texturé et l'information de profondeur, c'est-à-dire les clés de profondeur associées à chacun des pixels de l'image de l'objet 3D texturé, ont été calculées, chaque clé de profondeur de l'objet 3D texturé est comparée à la clé correspondante de l'image pré-calculée stockée dans la mémoire tampon. Si la valeur de la clé de profondeur de l'objet 3D texturé est inférieure à la valeur de la clé de profondeur de l'image pré-calculée, les données du pixel de l'objet 3D texturé associé à la clé de profondeur écrasent les données du pixel correspondant de l'image pré-calculé dans la première mémoire tampon et ce sont les données de ce pixel de l'objet 3D texturé qui sont affichées dans l'image résultant de la composition, sur la base du contenu de cette première mémoire tampon. A l'inverse, si la valeur de la clé de profondeur de l'objet 3D texturé est supérieure à la valeur de la clé de profondeur de l'image pré-calculée, les données du pixel de l'objet 3D texturé associé à la clé de profondeur n'écrasent pas les données du pixel correspondant de l'image pré-calculée dans la première mémoire tampon et ce sont les données du pixel de l'image pré-calculée qui sont affichées dans l'image résultant de la composition, sur la base du contenu de cette première mémoire tampon. Le processus ainsi décrit s'applique pour chaque pixel de chaque image de l'objet 3D texturé.

Selon une autre variante, les première et deuxième mémoires tampons sont initialisées par respectivement les données de chaque nouvelle image pré-calculée de l'environnement et de l'information de profondeur associée entrant dans le composeur 3D. Ainsi, une fois qu'une image de la séquence vidéo 340 (issue du mélange d'une image pré-calculée et d'une image de l'objet 3D texturé) a été composée et sortie du composeur 3D 34, les mémoires tampons sont initialisées automatiquement avec des données qui serviront de base pour la composition d'une nouvelle image de la séquence vidéo 340.

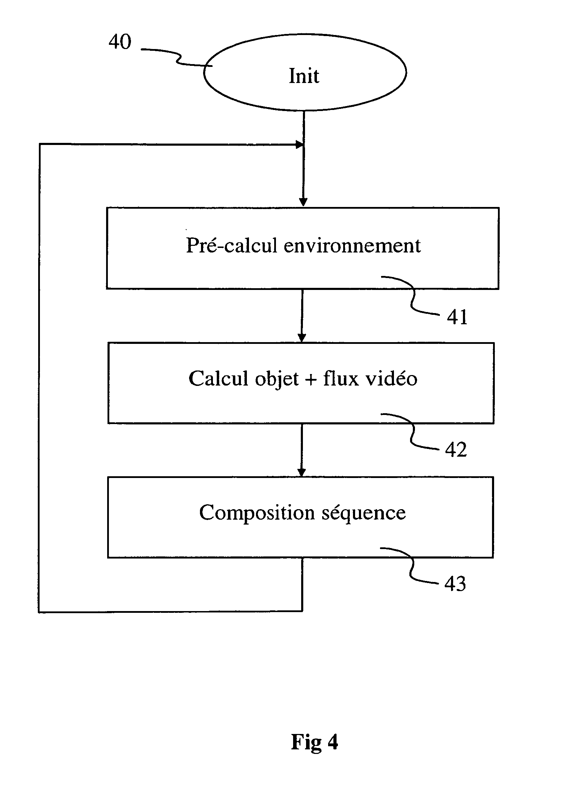

La **figure 4** illustre un procédé de construction d'une séquence vidéo en temps réel mis en oeuvre dans un système 3, selon un exemple de mise en oeuvre non limitatif particulièrement avantageux de l'invention.

Au cours d'une étape d'initialisation 40, les différents paramètres des éléments composant le système 3 (notamment la station de travail 31 et le composeur 3D 34) sont mis à jour.

Ensuite, au cours d'une étape 41, les données représentatives d'une première image d'un environnement 3D 10 sont pré-calculées ainsi qu'une première information de profondeur associée à la première image pré-calculée. De manière avantageuse, le pré-calcul est réalisé pour plusieurs images représentatives de l'environnement, par exemple pour un environnement vidéo comprenant plusieurs images se succédant temporellement ou pour chaque image d'un point de vue différent de l'environnement, c'est-à-dire pour chaque image de l'environnement prise selon un angle de vision différent. Dans le cas où plusieurs images sont pré-calculées, une information de profondeur est également pré-calculée pour chaque image de l'environnement et associée à cette dernière.

Puis, au cours d'une étape 42, les données représentatives d'une deuxième image représentant un objet 3D modélisé dont la texture est formée d'une image courante d'un flux vidéo temps réel sont calculées en temps réel. De manière avantageuse, l'objet 3D modélisé est modélisé par pré-calcul selon toute méthode connue de l'homme du métier, avant que ne lui soit appliqué une image courante d'un flux vidéo par placage pour former sa texture. Une deuxième information de profondeur associée à la deuxième image est également calculée en temps réel. De manière avantageuse, le flux vidéo temps réel plaqué sur l'objet 3D modélisé pour former la structure de l'objet 3D modélisé est formé de plusieurs images. Les données représentatives de chaque image de l'objet 3D texturé sont donc calculées en temps réel, pour chaque image de l'objet 3D texturé ainsi que l'information de profondeur associée à chacune de ces images.

Enfin, au cours d'une étape 43, une séquence vidéo est composée par mélange de la ou les premières images pré-calculées de l'environnement à la ou les deuxièmes images de l'objet 3D texturé. Le mélange de chacune des première et deuxième images est réalisée en fonction de chaque première information de profondeur associée à chaque première image et de chaque deuxième information de profondeur associée à chaque deuxième image, par exemple par comparaison des première et deuxième informations de profondeur, l'image ou la partie de l'image dont l'information de profondeur associée a la valeur la plus faible est affichée dans l'image composée.

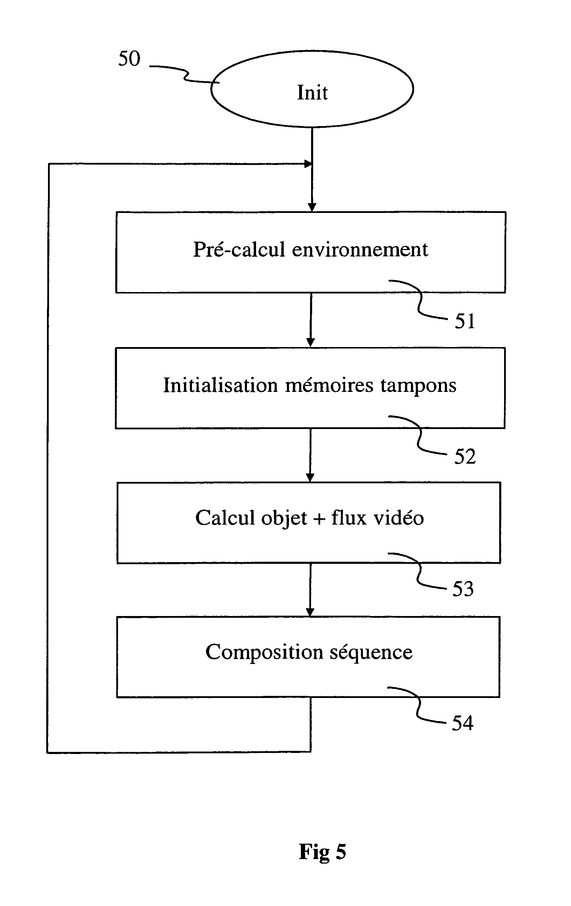

La **figure 5** illustre un procédé de construction d'une séquence vidéo en temps réel mis en oeuvre dans un système 3, selon un autre exemple de mise en oeuvre non limitatif particulièrement avantageux de l'invention.

Au cours d'une étape d'initialisation 50, les différents paramètres des éléments composant le système 3 (notamment la station de travail 31 et le composeur 3D 34) sont mis à jour.

Ensuite, au cours d'une étape 51, les données représentatives d'une ou plusieurs premières images d'un environnement 3D sont pré-calculées ainsi que la ou les premières informations de profondeur associées. L'étape 51 est similaire à l'étape 41 décrite en regard de la figure 4 et n'est pas détaillée à nouveau dans ce paragraphe.

Puis, au cours d'une étape 52, une mémoire tampon de type G-RAM (de l'anglais « Graphics Random Access Memory » ou mémoire vive graphique en français), RAM (de l'anglais « Random Access Memory » ou mémoire vive en français) ou flash par exemple servant au stockage des données représentatives d'une deuxième image de l'objet 3D texturé calculées en temps réel est initialisée avec les données représentatives d'une première image de l'environnement pré-calculées. De la même façon, une mémoire tampon de type G-RAM, RAM ou flash par exemple servant au stockage de la deuxième information de profondeur associée à une deuxième image de l'objet 3D texturé calculée en temps réel est initialisée avec la première information de profondeur associée à une première image de l'environnement pré-calculée.

Puis, au cours d'une étape 53, la ou les images d'un flux vidéo temps réel sont plaquées sur la ou les images correspondantes d'un objet 3D modélisé pour former la texture de l'objet 3D modélisé. L'objet 3D modélisé ayant pour texture les images du flux vidéo temps réel est nommé par la suite objet 3D texturé. Tel que décrit dans l'étape 42 en regard de la figure 4, les données représentatives de la ou les deuxièmes images représentant l'objet 3D texturé sont calculées en temps réel ainsi que la ou les deuxièmes informations de profondeur associées.

Enfin, au cours d'une étape 54, une séquence vidéo est composée par mélange de la ou les deuxièmes images de l'objet 3D texturé avec la ou les premières images correspondantes pré-calculées de l'environnement en fonction des première et deuxième informations de profondeur associées. La deuxième information de profondeur calculée en temps réel est comparée à la première information de profondeur stockée dans la mémoire tampon destinée initialement au stockage de la deuxième information de profondeur. Si la deuxième information de profondeur a une valeur inférieure à celle de la première information de profondeur, alors les données représentatives de la deuxième image sont stockées dans la mémoire tampon initialisée avec les données représentatives de la première image et écrasent les données représentatives de la première image. Cela a pour résultat d'afficher les données représentatives de la deuxième image dans l'image composée résultant du mélange des première et deuxième images. A l'inverse, si la deuxième information de profondeur a une valeur supérieure à celle de la première information de profondeur, alors les données représentatives de la deuxième image n'écrasent pas les données représentatives de la première image qui sont stockées dans la mémoire tampon initialisée avec les données représentatives de la première image. Cela a pour résultat d'afficher les données représentatives de la première dans l'image composée résultant du mélange des première et deuxième images. De manière avantageuse, les informations de profondeur correspondent à un ensemble de clés de profondeur, une clé de profondeur étant associé à chaque pixel d'une image. Selon une variante, au moins un test d'occultation est réalisé pour chaque pixel de chaque image de la séquence vidéo résultant du mélange d'une première image à une deuxième image. Le test d'occultation est avantageusement réalisé suivant la méthode dite du tampon de profondeur (de l'anglais « Z-buffer ») par comparaison de chaque clé de profondeur associée à un pixel d'une deuxième image d'un objet 3D texturé à chaque clé de profondeur associée à un pixel d'une première image de l'environnement pré-calculé, les pixels comparés ayant les mêmes coordonnées spatiales. Le pixel dont la clé de profondeur a la plus petite valeur est affiché dans l'image composée.

Avantageusement, les étapes 51, 52, 53 et 54 sont répétées pour chaque première image de l'environnement pré-calculée et pour chaque image de l'objet 3D texturé calculée en temps réel. La mémoire tampon destinée au stockage des données des deuxièmes images est initialisée avec les données d'une nouvelle première image à l'issue de la composition d'une image de la séquence vidéo réalisée par le mélange d'une première image précédant la nouvelle première image à stocker dans la mémoire tampon et d'une deuxième image correspondant temporellement. De la même manière, la mémoire tampon destinée au stockage des informations de profondeur associées aux deuxièmes images est initialisée avec l'information de profondeur associée à une nouvelle première image à l'issue de la composition d'une image de la séquence vidéo réalisée par le mélange d'une première image précédant la nouvelle première image à stocker dans la mémoire tampon et d'une deuxième image correspondant temporellement.

Bien entendu, l'invention ne se limite pas aux modes de réalisation décrits précédemment.

En particulier, l'invention n'est pas limitée à un procédé de construction en temps réel d'une séquence vidéo mais s'étend au système mettant en oeuvre un tel procédé, et notamment au composeur 3D mettant en oeuvre un tel procédé.

De manière avantageuse, la séquence vidéo comprend plusieurs objets modélisés en trois dimensions, chaque objet ayant une mobilité spécifique par rapport aux autres objets 3D modélisés. Selon une variante, plusieurs flux vidéo temps réels sont plaqués sur la pluralité d'objets 3D modélisés pour former une pluralité d'objet 3D texturés, à chaque objet 3D modélisé étant plaqué un flux vidéo temps réel différent, chaque objet 3D texturé possédant ainsi une texture particulière. Selon une autre variante, un même flux vidéo est appliqué à plusieurs objets 3D modélisés, ces derniers possédant ainsi une même texture.

## Revendications

1. Procédé de construction en temps réel d'une séquence vidéo (340), ladite séquence comprenant un objet modélisé en trois dimensions (311), **caractérisé en ce que** le procédé comprend les étapes de :
- pré-calcul (41, 51) de données représentatives d'au moins une première image d'un environnement en trois dimensions et d'une première information de profondeur associée à ladite image (310) ;
- calcul temps réel (42, 53) de :
- données représentatives d'au moins une deuxième image représentant ledit objet modélisé sur lequel est plaquée une image courante d'un flux vidéo temps réel (320), ladite image courante formant la texture de l'objet modélisé, et
- une deuxième information de profondeur associée à ladite au moins une deuxième image ; et
- composition en temps réel (43, 54) de ladite séquence par mélange desdites au moins une première et au moins une deuxième images en fonction desdites première et deuxième informations de profondeur.

2. Procédé selon la revendication 1, **caractérisé en ce qu'**il comprend les étapes de :
- initialisation (52) d'un tampon destinataire de ladite au moins une deuxième image avec les données représentatives de ladite au moins une première image ; et
- initialisation (52) d'un tampon destinataire de ladite deuxième information de profondeur avec ladite première information de profondeur.

3. Procédé selon l'une des revendications 1 à 2, **caractérisé en ce que** au moins un test d'occultation est effectué pour chaque pixel de ladite séquence pendant ladite composition.

4. Procédé selon l'une des revendications 1 à 3, **caractérisé en ce que** ledit environnement est une vidéo pré-calculée avec caméra fixe.

5. Procédé selon l'une des revendications 1 à 3, **caractérisé en ce que** ledit environnement est une vidéo pré-calculée avec caméra mobile.

## Claims

1. Method for live construction of a video sequence (340), said sequence comprising an object modelled in three dimensions (311), **characterized in that** the method comprises steps for:
- pre-calculating (41, 51) data representative of at least one first image of a three-dimensional environment and a first item of depth information associated with said image (310),
- live calculation (42, 53) of:
- data representative of at least one second image representing said modelled object on which is mapped a current image of a live video stream (320), said current image forming the texture of the modelled object, and
- a second item of depth information associated with said at least one second image, and
- live composition (43, 54) of said sequence by combining said at least one first image and at least one second image according to said first and second items of depth information.

2. Method according to claim 1, **characterized in that** it comprises the steps of:
- initializing (52) a destination buffer of said at least one second image with the data representative of said at least one first image, and
- initializing (52) a destination buffer of said second item of depth information with said first item of depth information.

3. Method according to one of claims 1 to 2, **characterized in that** at least one occlusion test is carried out for each pixel of said sequence during said composition.

4. Method according to one of claims 1 to 3, **characterized in that** said environment is a video pre-calculated with a fixed camera.

5. Method according to one of claims 1 to 3, **characterized in that** said environment is a video pre-calculated with a mobile camera.

## Patentansprüche

1. Verfahren zum Echtzeitaufbau einer Videosequenz (340), wobei die Sequenz ein dreidimensional modelliertes Objekt (311) umfasst, **dadurch gekennzeichnet, dass** das Verfahren die folgenden Schritte umfasst:
- Vorberechnung (41, 51) von Daten, die für mindestens ein erstes Bild einer dreidimensionalen Umgebung und für eine erste, dem Bild zugeordnete Tiefeninformation (310) repräsentativ sind,
- Echtzeitberechnung (42, 53) von:
- Daten, die für mindestens ein zweites Bild repräsentativ sind, das das modellierte Objekt darstellt, auf das ein aktuelles Bild eines Echtzeitvideostroms (320) aufgetragen ist, wobei das aktuelle Bild die Textur des modellierten Objekts bildet, und
- einer zweiten, dem mindestens zweiten Bild zugeordneten Tiefeninformation, und
- Echtzeitzusammenstellung (43, 54) der Sequenz durch Mischung des mindestens einen ersten und des mindestens einen zweiten Bilds in Abhängigkeit von der ersten und von der zweiten Tiefeninformation.

2. Verfahren nach Anspruch 1, **dadurch gekennzeichnet, dass** es die folgenden Schritte umfasst:
- Initialisierung (52) eines Empfangspuffers für das mindestens eine zweite Bild mit den für das mindestens eine erste Bild repräsentativen Daten und
- Initialisierung (52) eines Empfangspuffers für die zweite Tiefeninformation mit der ersten Tiefeninformation.

3. Verfahren nach einem der Ansprüche 1 bis 2, **dadurch gekennzeichnet, dass** mindestens ein Verdeckungstest für jedes Pixel der Sequenz während der Zusammenstellung erfolgt.

4. Verfahren nach einem der Ansprüche 1 bis 3, **dadurch gekennzeichnet, dass** die Umgebung ein mit einer stationären Kamera vorberechnetes Video ist.

5. Verfahren nach einem der Ansprüche 1 bis 3, **dadurch gekennzeichnet, dass** die Umgebung ein mit einer mobilen Kamera vorberechnetes Video ist.
